# EUROPEAN PATENT SPECIFICATION

(11) **EP 2 293 927 B1**
(45) Date of publication and mention of the grant of the patent: **21.11.2012**
(21) Application number: 09750802.2
(22) Date of filing: 15.05.2009
(51) Int. Cl.: B29D 30/24, B29D 30/32

(54) **TYRE BUILDING DRUM FOR BUILDING AN UNVULCANISED TYRE**
REIFENBAUTROMMEL ZUM BAU EINES NICHT VULKANISIERTEN REIFENS
TAMBOUR DE CONFECTION DE PNEUMATIQUES POUR LA CONFECTION D'UN PNEUMATIQUE NON VULCANISÉ

(30) Priority: 22.05.2008 NL 2001604; 22.05.2008 US 128517 P
(43) Date of publication of application: 16.03.2011
(73) Proprietor: VMI Holland B.V., 8161 RK Epe (NL)
(72) Inventor: DE GRAAF, Martin, NL-8166 KZ Emst (NL); SLOTS, Antonie, NL-8111 RS Heeten (NL); MULDER, Gerrit, NL-8167 NS Oene (NL)
(74) Representative: Peters, Sebastian Martinus
(86) International application number: PCT/NL2009/050264
(87) International publication number: WO 2009/142482

(56) References cited:
- EP-A- 1 595 694
- EP-B- 1 439 054
- WO-A-2007/110039
- US-A1- 2001 050 148

## Description

### BACKGROUND OF THE INVENTION

The invention relates to a tyre building drum for building an unvulcanised tyre using rubber tyre components, wherein the tyre building drum comprises a central drum shaft and two drum halves arranged at least almost substantially symmetrical with respect to the centre of the tyre building drum and around the drum shaft.

Such a tyre building drum is known from EP-B1-1,439.054. Said known tyre building drum comprises a base spindle for the folding units, around which base spindle a hollow second spindle for the bead ring core clamping units is arranged coaxially. The base spindle can be coupled to the hollow second spindle by means of a connectable coupling, so that both spindles can be coupled to each other (for moving the entire drum half) and uncoupled from each other. Although compared to other tyre building drums using a pneumatic drive for the folding arm carrier bodies said known tyre building drum, due to use of particularly the base spindle, provides a considerable improvement regarding the synchronous lifting of the two folding arm units, the known tyre building drum has a few drawbacks. For instance the connectable coupling does not only constitute a relatively expensive and complicated additional part, said connectable coupling is also difficult to repair in case of a failure. Due to the use of the two coaxial spindles the tyre building drum is also relatively long and bulky.

Document US 2001/050148 - A discloses a tire building drum comprising a main drum shaft, a pair of movable bodies, approaching-separating means for moving these movable bodies in opposite directions, plural bead lock segments movably supported by each of the movable bodies in a radial direction, enlarging-contracting means for synchronously moving these bead lock segments in the radial direction, a seal member, a hollow cylindrical body and plural turnup fingers, wherein the seal member comprises an inner elongated portion extending inward from its base end part airtightly fixed to the movable body in the axial direction and an outer elongated portion extending outward from an inner end of the inner elongated portion in the axial direction.

Document WO 2007/110039 - A discloses a tire building drum with folded sections for producing unvulcanized tire blanks. A plurality of roller arms of the folded sections are coupled to a drive which is disposed at the exterior of the tire building drum.

It is among others an object of the invention to provide a tyre building drum for building an unvulcanised tyre that is maintenance-friendlier and which can be designed more compact.

### SUMMARY OF THE INVENTION

For that purpose according to the invention a tyre building drum for building an unvulcanised tyre of the type mentioned in the preamble is defined in claim 1, wherein in the drum shaft one threaded spindle is arranged, wherein on either side of the centre of the tyre building drum the thread has an equal-sized pitch yet in opposite direction, wherein on either side of the centre of the tyre building drum a driving nut is arranged on the spindle, wherein each driving nut is fixedly connected to the drum half in question via a connection part, wherein the drum shaft is provided with a drum shaft slot for accommodating the connection part, wherein both drum halves are movable in axial direction of the tyre building drum, wherein each drum half comprises a folding arm unit with folding arms, that are connected to the drum half in question so as to swing, wherein the folding arm unit is movable in axial direction of the tyre building drum, wherein each drum half further comprises a bead ring core clamping unit, intended for supporting and clamping a bead ring core, wherein the bead ring core clamping unit is arranged on a cylindrical part arranged around the drum shaft, wherein the cylindrical part is provided with a cylinder slot for accommodating the connection part and with a locking mechanism, wherein the locking mechanism can be brought into and out of engagement with the drum shaft, wherein at engagement of the locking mechanism in the drum shaft the folding arm unit can be moved with respect to the cylindrical part in axial direction of the tyre building drum. By using the locking mechanism it is possible on the one hand (in the position in which the locking mechanism is out of engagement with the drum shaft) to move the entire drum half axially, and on the other hand (in the position in which the locking mechanism is in engagement with the drum shaft) it is possible to move the folding arm unit axially with respect to the cylindrical part. In this way only one spindle will be necessary for the operation of the bead ring core clamping unit and the operation of the folding arm unit, as a result of which the tyre building drum can be designed maintenance-friendlier and more compact. Preferred embodiments of the invention are defined in the dependent claims.

In one embodiment of a tyre building drum according to the invention the locking mechanism comprises a piston part that can be pneumatically activated, which piston part is provided with piston part teeth, wherein the drum shaft is provided with drum shaft teeth, wherein the piston part teeth can be brought into engagement with the drum shaft teeth. As a result it is possible to accurately realise an engagement of the locking mechanism and the drums.

When the locking mechanism is placed shifted in circumferential direction with respect to the cylinder slot, the drum half can be designed relatively simple as regards construction.

In one embodiment of a tyre building drum according to the invention the cylindrical part comprises a piston chamber in which a piston can be moved, which piston is fixedly connected to the folding arm unit. As a result the operation of the folding arm unit can be supported by the spindle.

In an advantageous embodiment of a tyre building drum according to the invention each drum half comprises a unit that can be pneumatically activated for radially moving the bead ring core clamping unit.

In a further advantageous embodiment of a tyre building drum according to the invention each drum half comprises a casing cover part that is axially movable with respect to the cylindrical part, which casing cover part forms an at least substantially closed casing surface for supporting rubber components and at the circumference is provided with recesses for accommodating the folding arms. A substantially closed casing surface for supporting rubber components is known per se from WO-01/68256-A1. In that case, however, the casing surface is formed by individual casing surface parts that have each been movably arranged on a folding arm. In the inactive position of the folding arms the casing surface parts together form a substantially closed casing surface. Said known embodiment however is a relatively complicated and expensive embodiment. According to the invention the casing cover part is formed by a single cylindrical part that is relatively easy to produce at low-cost. Due to the axial movement of the casing part the rolls of the folding arms are released, after which the folding arms can be moved at greater distance from the drum shaft. This also offers the opportunity in a further embodiment of a tyre building drum according to the invention to provide the casing cover part with a vacuum device for retaining rubber components on the casing cover part.

An as regards construction relatively simple embodiment of a tyre building drum according to the invention is realised when the bead ring core clamping unit comprises a shoulder part for supporting a bead core, which shoulder part is mechanically connected to the casing cover part by a mechanical connection.

In one advantageous embodiment of a tyre building drum according to the invention the spindle is driven by a servomotor. Particularly when the locking mechanism comprises a piston part with teeth, the servomotor is able to give a position signal to the operation of the locking mechanism when the correct position has been reached at which the locking mechanism should be activated. In this way a highly accurately functioning tyre building drum can be realised.

### SHORT DESCRIPTION OF THE DRAWINGS

The invention will be elucidated on the basis of an exemplary embodiment shown in the attached drawings, in which:
Figure 1 schematically shows a tyre building drum for building an unvulcanised tyre as a part of a larger tyre building assembly;
Figures 2A-2F schematically show a cross-section of the top part of one drum half in several stages of the tyre building process; and
Figures 3A-3D schematically show a top and side view of a casing cover part with a folding arm in the position in which the casing cover part covers and releases, respectively, the roll of the folding arm.

### DETAILED DESCRIPTION OF THE DRAWINGS

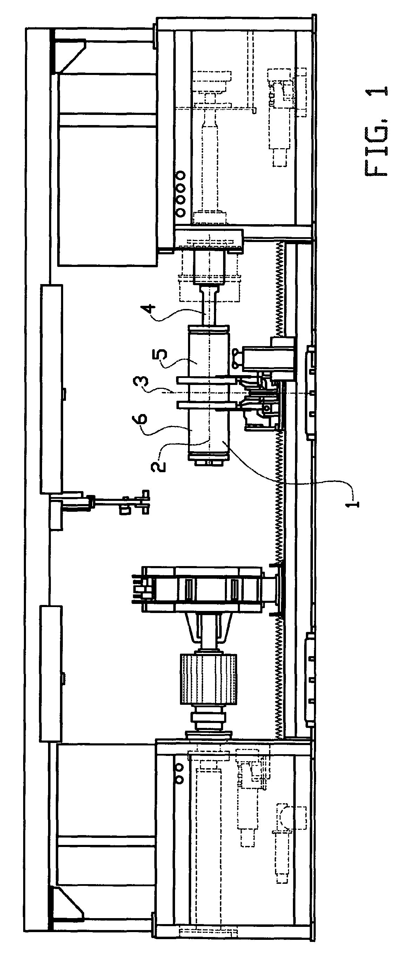

Figure 1 schematically shows a tyre building drum 1 for building an unvulcanised tyre as a part of a larger tyre building assembly.

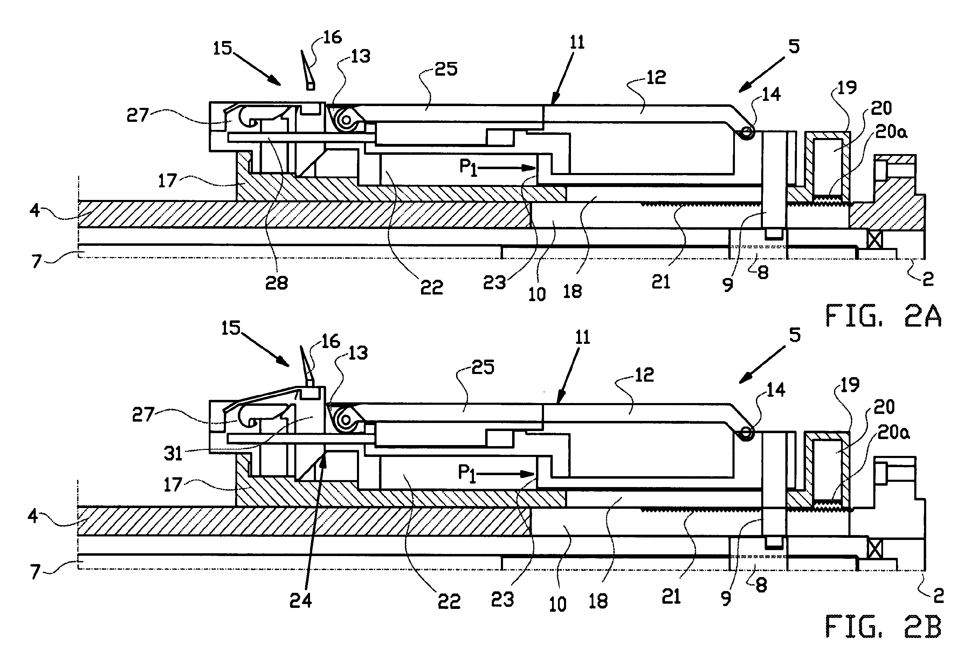

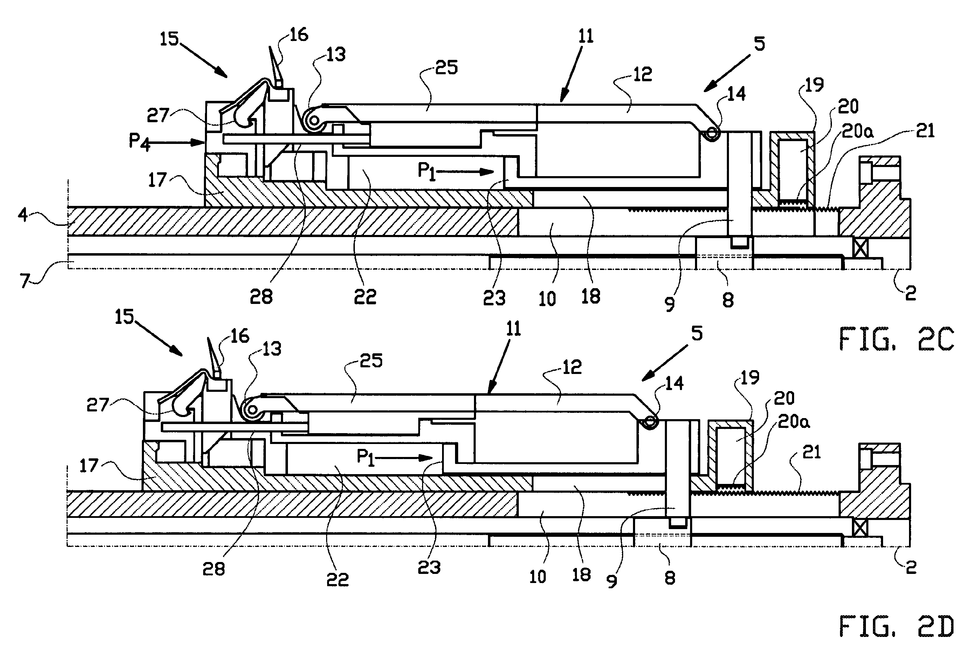

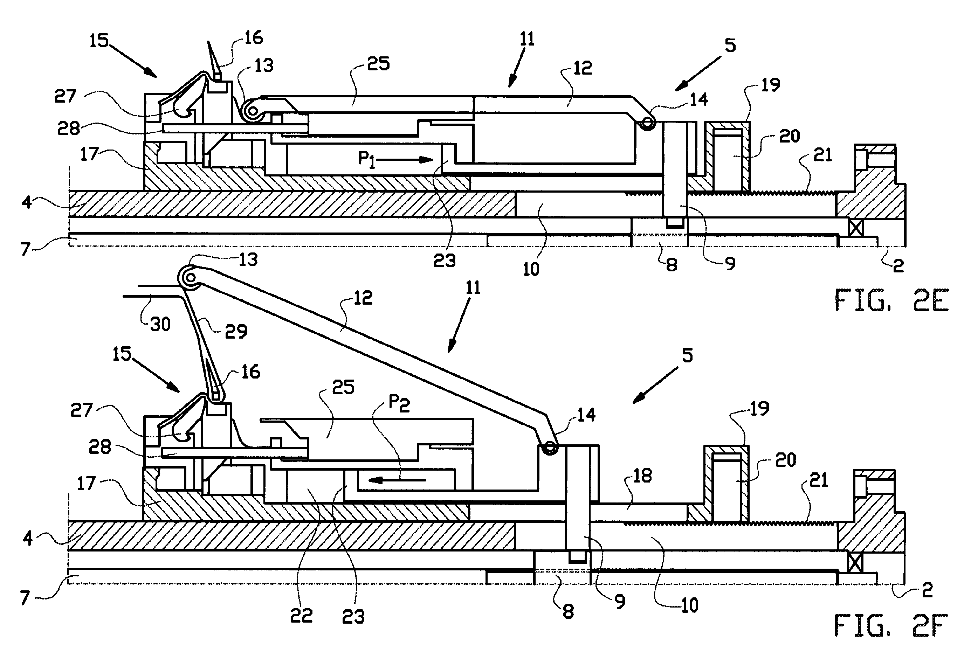

Figures 2A-2F schematically show cross-sections of a part of the inventive tyre building drum 1 for building an unvulcanised tyre. The tyre building drum 1 is at least almost substantially a-symmetrical with respect to the longitudinal drum centre line 2 and with respect to the centre 3 (figure 1) of the drum 1. For this reason the building parts that are always situated opposite are not shown in figure 2.

The tyre building drum comprises a central drum shaft 4 and two drum halves 5, 6 (figure 1) that are arranged at least almost substantially symmetrical with respect to the centre of the tyre building drum and around the drum shaft. One threaded spindle 7 is arranged in the drum shaft 4. On either side of the centre 3 of the tyre building drum 1 the thread has an equal-sized pitch yet in opposite direction. On either side of the centre 3 of the tyre building drum 1 a driving nut 8 (only one of which is shown in figure 2) is arranged on the spindle 7, wherein each driving nut 8 is fixedly connected to the drum half 5 (as shown in figure 2) in question via a connection part 9. The drum shaft 4 is provided with a drum shaft slot 10 for accommodating the connection part 9. The drum shaft slot 10 is of sufficient length to allow the axial movement of the connection part 9 necessary for the operation of the tyre building drum. Due to driving the spindle 7 the spindle nut 8 is moved over the spindle 7, wherein the spindle nut 8 takes along the drum half 5 in question via the connection part 9. Thus both drum halves 5, 6 can be moved in axial direction of the tyre building drum 1.

The drum half 5 has a folding arm unit 11 having folding arms 12 which at the free end are provided with a roll 13. Each folding arm 12 is connected to the drum half 5 so as to swing about a swivel axle 14. The folding arm unit 11 can be moved jointly with the drum half 5 by driving the spindle 7 in axial direction of the tyre building drum 1.

The drum half 5 further has a bead ring core clamping unit 15 intended for supporting and clamping a bead ring core 16. The bead ring core clamping unit 15 is arranged on a cylindrical part 17 (only partially hatched for the simplicity of the drawing) arranged around the drum shaft 4. The cylindrical part 17 is provided with a cylinder slot 18 for accommodating the connection part 9. The cylinder slot 18 and the drum shaft slot 10 are in communication with each other so that the connection part 9 extends through both slots from the driving nut 8 to the drum half 5. The cylindrical part 17 is furthermore provided with a locking mechanism 19. In the exemplary embodiment shown in figure 2 the locking mechanism 19 comprises a piston part 20 that can be pneumatically activated, which piston part 20 is provided with piston part teeth 20a, wherein the drum shaft 4 is provided with drum shaft teeth 21, wherein the piston part teeth can be brought into engagement with the drum shaft teeth. In order to achieve more freedom as regards construction it is advantageous to place the locking mechanism shifted in circumferential direction with respect to the cylinder slot, although for the sake of simplicity of the drawing in figure 2 the embodiment is shown with the slot and the locking mechanism in one plane.

When the locking mechanism 19 has been brought into engagement with the drum shaft 4, the folding arm unit 11 can be moved with respect to the cylindrical part 17 (and therefore with respect to the bead ring core clamping unit 15) in axial direction of the tyre building drum 1. As a result when the locking mechanism 19 is in engagement with the drum shaft 4, at operation of the spindle 7, the folding arms 12 are swung upwards about the swivel axle 14, as schematically shown in figure 2F. When the locking mechanism is out of engagement, the operation of the spindle ensures movement of the drum half in its entirety.

For specific (particularly relatively heavy) tyre components 4, it is advantageous when the upward swinging of the folding arms is supported. In the embodiment shown said support is realised because the cylindrical part 17 comprises a piston chamber 22 in which a piston 23 can be moved, which piston 23 is fixedly connected to the folding arm unit 11. By applying pressure P2 (figure 2F) on the piston 23, swinging the folding arms 12 upward is supported by operation of the spindle 7.

The drum half 5 has a unit 24 (known per se) that can be pneumatically activated (shown in figure 2B by P3) for radially moving the bead ring core clamping unit 13 for clamping the bead ring core 16.

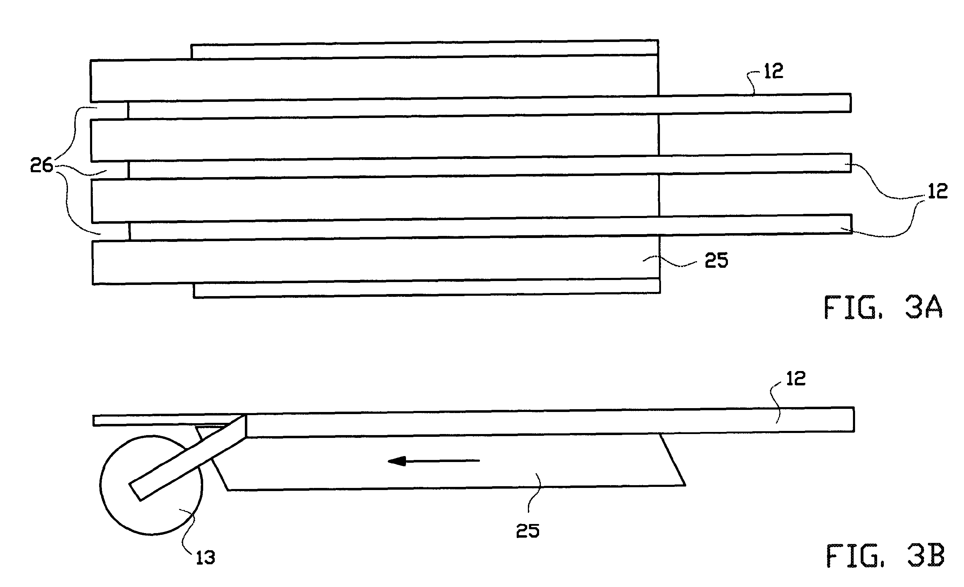

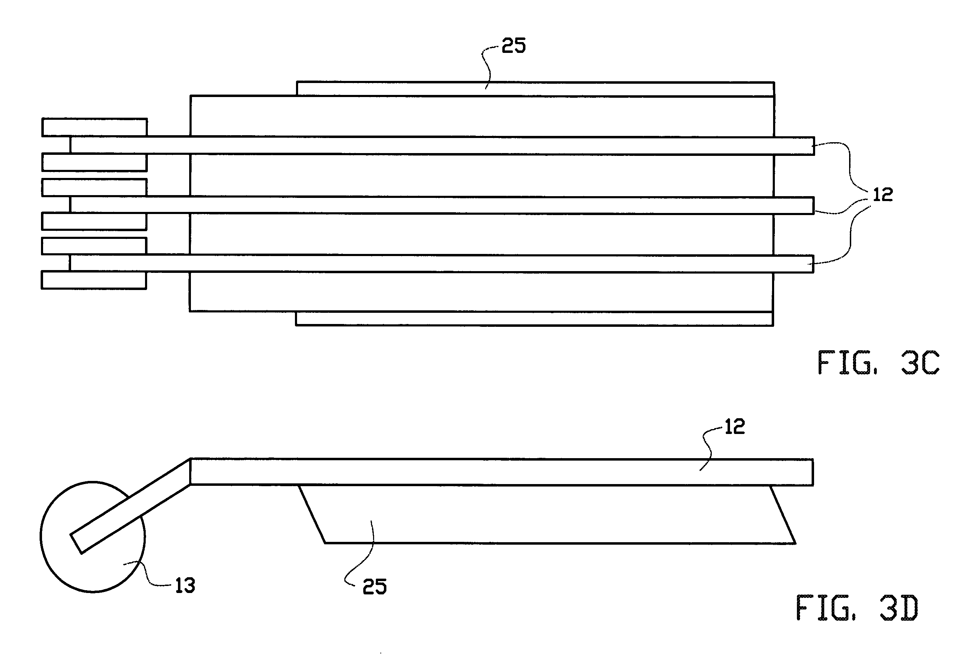

The drum half 5 further has a casing cover part 25 (also see figures 3A-3D) that can be axially moved with respect to the cylindrical part 17. The casing cover part 25 forms an at least substantially closed casing surface for supporting rubber components from which the green tyre is manufactured. At the circumference the casing cover part is provided with recesses 26 (figure 3A) for accommodating the folding arms 12 and allowing them through when swung upward. In the situation as shown in figures 2A and 2B the casing cover part 25 covers the rolls 13 of the folding arms 12 so that they are confined within the casing cover part 25. In the situation as shown in figures 2C-2F the casing cover part 25 has been moved to the right (as seen in the drawing) with respect to the rolls 13, so that the rolls 13 are no longer confined and it is permitted that the folding arms 12 can be moved upwards through the recesses 26 of the casing cover part 25. Although not shown in the figures it is possible in one embodiment of the invention that the casing cover part 25 is provided with a vacuum device for retaining rubber components on the casing cover part, as a result of which the manufacture of a green tyre can be carried out more accurately. As the arms 12 with rolls 13 are swung upwards, a side wall 29 (figure 2F) is pressed around the bead ring core 16 and against a shaped carcass part 30.

As shown in figures 2A-2F the bead ring core clamping unit 15 has a shoulder part 27 (known per se) for supporting (in the situation as shown in figures 2C-2F) a bead core 16. Said shoulder part 27 according to the invention is mechanically connected to the casing cover part 25 by a mechanical connection 28. Due to said mechanical connection 28 bringing the shoulder part 27 in the supporting position and the axial movement of the casing cover part 25 for releasing the rolls 13 takes place simultaneously.

Particularly when the spindles 7 are driven by their own servomotor, a highly accurate drive can be realised. The servomotor can also be used to guarantee that both teeth 20a and 21 mesh correctly. As the configuration of the locking mechanism 19 is known, and the position of the drum half 5 with respect to the drum shaft 4 is known as a result of the servomotor, the servomotor is able to give a position signal to the operation of the locking mechanism at the correct position, in order to ensure that meshing takes place.

Below the operation of the tyre building drum 1 according to the invention will be described in short on the basis of figures 2A-2F. In figure 2A the situation is shown in which the parts of the drum half 5 are in the inactive position. In the situation shown in figure 2B due to the locking mechanism 19, 20 and the drum shaft 4 being out of engagement and due to pressure maintenance P1 in the piston chamber 22 the bead ring core clamping unit 15 is coupled to the folding arm unit 11. Due to rotation of the spindle 7 the entire drum half 5 can be moved axially to the position in which the bead ring core 16 can be placed. After arranging the tyre components and the bead ring cores the bead ring core 16 can be clamped by pneumatically activating the unit 24 and radial movement of the segment 31 ensures clamping. In the situation as shown in figure 2C the shoulder part 27 is activated by driving the spindle 7 supported by pneumatic activation (P4). Simultaneously the casing cover part 25 is axially retracted. In figure 2D the entire drum half 5 is axially moved wherein the rubber components of the product to be built are partially inflated. In figure 2E the situation is shown in which the locking mechanism 19, 20 is brought into engagement with the drum shaft 4. Further driving of the spindle 7 and applying a pressure P2 in the piston chamber 22 ensures that the folding arms are moved upwards and towards the centre 3 of the building drum 1 so that the side wall 29 is pressed around the bead ring core and against the inflated carcass 30. After that the parts can be brought into the situation again as shown in figure 2A.

The above description is included to illustrate the operation of preferred embodiments of the invention and not to limit the scope of the invention. Starting from the above explanation many variations that fall within the scope of the present invention, particularly as defined in the attached claims, will be evident to an expert.

## Claims

1. Tyre building drum (1) for building an unvulcanised tyre using rubber tyre components, wherein the tyre building drum comprises a central drum shaft (4) and two drum halves (5, 6) arranged at least almost substantially symmetrical with respect to the centre (3) of the tyre building drum (1) and around the drum shaft (4), wherein in the drum shaft (4) one threaded spindle (7) is arranged, wherein on either side of the centre (3) of the tyre building drum (1) the thread has an equal-sized pitch yet in opposite direction, wherein on either side of the centre (3) of the tyre building drum (1) a driving nut (8) is arranged on the spindle (7), wherein each driving nut (8) is fixedly connected to the drum half (5) in question via a connection part (8), wherein the drum shaft (4) is provided with a drum shaft slot (10) for accommodating the connection part (9), wherein both drum halves (5, 6) are movable in axial direction of the tyre building drum (11,
wherein each drum half (5, 6) comprises a folding arm unit (11) with folding arms (12), that are connected to the drum half (5) in question so as to swing, wherein the folding arm unit (11) is movable in axial direction of the tyre building drum (1), wherein each drum half (5, 6) further comprises a bead ring core clamping unit (15), intended for supporting and clamping a bead ring core (16), wherein the bead ring core clamping unit (15) is arranged on a cylindrical part (17) arranged around the drum shaft (4), **characterised in that** the cylindrical part (17) is provided with a cylinder slot (18) for accommodating the connection part (9) and with a locking mechanism (19), wherein the locking mechanism (19) can be brought into and out of engagement with the drum shaft (4), wherein at engagement of the locking mechanism (19) in the drum shaft (4) the folding arm unit (11) can be moved with respect to the cylindrical part (17) in axial direction of the tyre building drum (1).

2. Tyre building drum (1) according to claim 1, **characterised in that** locking mechanism (19) comprises a piston part (20) that can be pneumatically activated, which piston part (20) is provided with piston part teeth (20a), wherein the drum shaft (4) is provided with drum shaft teeth (21), wherein the piston part teeth (20a) can be brought into engagement with the drum shaft teeth (21).

3. Tyre building drum (1) according to claim 1 or 2, **characterised in that** the locking mechanism (19) is placed shifted in circumferential direction with respect to the cylinder slot (18).

4. Tyre building drum (1) according to any one of the preceding claims, **characterised in that** the cylindrical part (17) comprises a piston chamber (22) in which a piston (23) can be moved, which piston (23) is fixedly connected to the folding arm unit (11).

5. Tyre building drum (1) according to any one of the preceding claims, **characterised in that** each drum half (5, 6) comprises a unit (24) that can be pneumatically activated for radially moving the bead ring core clamping unit (15).

6. Tyre building drum (1) according to any one of the preceding claims, **characterised in that** each drum half (5, 6) comprises a casing cover part (25) that is axially movable with respect to the cylindrical part (17), which casing cover part (25) forms an at least substantially closed casing surface for supporting rubber components and at the circumference is provided with recesses (26) for accommodating the folding arms (12) and letting them through.

7. Tyre building drum (1) according to claim 6, **characterised in that** the casing cover part (25) is provided with a vacuum device for retaining rubber components on the casing cover part (25).

8. Tyre building drum (1) according to claim 6 or 7, **characterised in that** the bead ring core clamping unit (15) comprises a shoulder part (27) for supporting a bead core (16), which shoulder part (27) is mechanically connected to the casing cover part (25) by a mechanical connection (28).

9. Tyre building drum (1) according to any one of the preceding claims, **characterised in that** the spindle (7) is driven by a servomotor.

## Patentansprüche

1. Reifenaufbautrommel (1) zum Aufbauen eines nicht vulkanisierten Reifens unter Verwendung von Kautschuk-Reifenbestandteilen, wobei die Reifenaufbautrommel eine mittige Trommelwelle (4) und zwei Trommelhälften (5, 6) umfasst, die wenigstens nahezu im Wesentlichen symmetrisch in Bezug auf die Mitte (3) der Reifenaufbautrommel (1) und um die Trommelwelle (4) angeordnet sind, wobei in der Trommelwelle (4) eine Gewindespindel (7) angeordnet ist, wobei auf beiden Seiten der Mitte (3) der Reifenaufbautrommel (1) das Gewinde eine gleichgroße Steigung, jedoch in entgegengesetzter Richtung hat, wobei auf beiden Seiten der Mitte (3) der Reifenaufbautrommel (1) eine Treibmutter (8) auf der Spindel (7) angeordnet ist, wobei jede Treibmutter (8) über ein Verbindungsteil (9) fest mit der betreffenden Trommelhälfte (5) verbunden ist, wobei die Trommelwelle (4) mit einem Trommelwellenschlitz (10) zum Aufnehmen des Verbindungsteils (9) versehen ist, wobei beide Trommelhälften (5, 6) in Axialrichtung der Reifenaufbautrommel (1) bewegt werden können,
wobei jede Trommelhälfte (5, 6) eine Faltarmeinheit (11) mit Faltarmen (12) umfasst, die so mit der Trommelhälfte (5) verbunden sind, dass sie schwenken, wobei die Faltarmeinheit (11) in Axialrichtung der Reifenaufbautrommel (1) beweglich ist, wobei jede Trommelhälfte (5, 6) ferner eine Wulstringkern-Klemmeinheit (15) umfasst, die dafür vorgesehen ist, einen Wulstringkern (16) zu haltern und festzuklemmen, wobei die Wulstringkern-Klemmeinheit (15) auf einem zylindrischen Teil (17) angeordnet ist, der um die Trommelwelle (4) angeordnet ist, **dadurch gekennzeichnet, dass** das zylindrische Teil (17) mit einem Zylinderschlitz (18) zum Aufnehmen des Verbindungsteils (9) und mit einem Verriegelungsmechanismus (19) versehen ist, wobei der Verriegelungsmechanismus (19) in und außer Eingriff mit der Trommelwelle (4) gebracht werden kann, wobei beim Eingriff des Verriegelungsmechanismus (19) in die Trommelwelle (4) die Faltarmeinheit (11) im Verhältnis zu dem zylindrischen Teil (17) in Axialrichtung der Reifenaufbautrommel (1) bewegt werden kann.

2. Reifenaufbautrommel (1) gemäß Anspruch 1, **dadurch gekennzeichnet, dass** der Verriegelungsmechanismus (19) ein Kolbenteil (20) umfasst, das pneumatisch aktiviert werden kann, wobei das Kolbenteil (20) mit Kolbenteilzähnen (20a) versehen ist, wobei die Trommelwelle (4) mit Trommelwellenzähnen (21) versehen ist, wobei die Kolbenteilzähne (20a) in Eingriff mit den Trommelwellenzähnen (21) gebracht werden können.

3. Reifenaufbautrommel (1) gemäß Anspruch 1 oder 2, **dadurch gekennzeichnet, dass** der Verriegelungsmechanismus (19) in Bezug auf den Zylinderschlitz (18) in Umfangsrichtung verschoben angeordnet ist.

4. Reifenaufbautrommel (1) gemäß einem der vorhergehenden Ansprüche, **dadurch gekennzeichnet, dass** das zylindrische Teil (17) eine Kolbenkammer (22) umfasst, in der ein Kolben (23) bewegt werden kann, wobei der Kolben (23) fest mit der Faltarmeinheit (11) verbunden ist.

5. Reifenaufbautrommel (1) gemäß einem der vorhergehenden Ansprüche, **dadurch gekennzeichnet, dass** jede Trommelhälfte (5, 6) eine Einheit (24) umfasst, die pneumatisch aktiviert werden kann, um die Wulstringkern-Klemmeinheit (15) in Radialrichtung zu bewegen.

6. Reifenaufbautrommel (1) gemäß einem der vorhergehenden Ansprüche, **dadurch gekennzeichnet, dass** jede Trommelhälfte (5, 6) ein Mantelabdeckungsteil (25) umfasst, das in Bezug auf das zylindrische Teil (17) in Axialrichtung beweglich ist, wobei das Mantelabdeckungsteil (25) eine wenigstens im Wesentlichen geschlossene Mantelfläche bildet, um Kautschukbestandteile zu haltern, und an dem Umfang mit Aussparungen (26) zum Aufnehmen der Faltarme (12) und Durchlassen derselben versehen ist.

7. Reifenaufbautrommel (1) gemäß Anspruch 6, **dadurch gekennzeichnet, dass** das Mantelabdeckungsteil (25) mit einer Vakuumeinrichtung zum Festhalten von Kautschukbestandteilen an dem Mantelabdeckungsteil (25) versehen ist.

8. Reifenaufbautrommel (1) gemäß Anspruch 6 oder 7, **dadurch gekennzeichnet, dass** die Wulstringkern-Klemmeinheit (15) ein Schulterteil (27) zum Tragen eines Wulstkerns (16) umfasst, wobei das Schulterteil (27) durch eine mechanische Verbindung (28) mechanisch mit dem Mantelabdeckungsteil (25) verbunden ist.

9. Reifenaufbautrommel (1) gemäß einem der vorhergehenden Ansprüche, **dadurch gekennzeichnet, dass** die Spindel (7) durch einen Servomotor angetrieben wird.

## Revendications

1. Tambour de confection de pneumatiques (1) pour la confection d'un pneu non vulcanisé utilisant des composants de pneu en caoutchouc, dans lequel le tambour de confection de pneumatiques comprend un arbre de tambour central (4) et deux demi-tambours (5, 6) agencés de manière au moins presque sensiblement symétrique par rapport au centre (3) du tambour de confection de pneumatiques (1) et autour de l'arbre de tambour (4), dans lequel, dans l'arbre de tambour (4), on agence une broche filetée (7), dans lequel de chaque côté du centre (3) du tambour de confection de pneumatiques (1), le filetage a un pas de dimension identique dans la direction opposée, dans lequel de chaque côté du centre (3) du tambour de confection de pneumatiques (1), on agence un écrou d'entraînement (8) sur la broche (7), dans lequel chaque écrou d'entraînement (8) est raccordé de manière fixe au demi-tambour (5) en question via une partie de raccordement (8), dans lequel l'arbre de tambour (4) est prévu avec une fente d'arbre de tambour (10) pour loger la partie de raccordement (9), dans lequel les deux demi-tambours (5, 6) sont mobiles dans la direction axiale du tambour de confection de pneumatiques (1),
dans lequel chaque demi-tambour (5, 6) comprend une unité de bras pliants (11) avec des bras pliants (12) qui sont raccordés au demi-tambour (5) en question afin d'osciller, dans lequel l'unité de bras pliants (11) est mobile dans la direction axiale du tambour de confection de pneumatiques (1), dans lequel chaque demi-tambour (5, 6) comprend en outre une unité de serrage de tringle annulaire (15), prévue pour supporter et serrer une tringle annulaire (16), dans lequel l'unité de serrage de tringle annulaire (15) est agencée sur une partie cylindrique (17) agencée autour de l'arbre de tambour (4), **caractérisé en ce que** la partie cylindrique (17) est prévue avec une fente cylindrique (18) pour loger la partie de raccordement (9) et avec un mécanisme de blocage (19), dans lequel le mécanisme de blocage (19) est amené en mise en prise et dégagé de l'arbre de tambour (4), dans lequel lors de la mise en prise du mécanisme de blocage (19) dans l'arbre de tambour (4), l'unité de bras pliants (11) peut être déplacée par rapport à la partie cylindrique (17) dans la direction axiale du tambour de confection de pneumatiques (1).

2. Tambour de confection de pneumatiques (1) selon la revendication 1, **caractérisé en ce que** le mécanisme de blocage (19) comprend une partie de piston (20) qui peut être activée de manière pneumatique, laquelle partie de piston (20) est prévue avec des dents de partie de piston (20a), dans lequel l'arbre de tambour (4) est prévu avec des dents d'arbre de tambour (21), dans lequel les dents de partie de piston (20a) peuvent être amenées en mise en prise avec les dents d'arbre de tambour (21).

3. Tambour de confection de pneumatiques (1) selon la revendication 1 ou 2, **caractérisé en ce que** le mécanisme de blocage (19) est déplacé dans la direction circonférentielle par rapport à la fente cylindrique (18).

4. Tambour de confection de pneumatiques (1) selon l'une quelconque des revendications précédentes, **caractérisé en ce que** la partie cylindrique (17) comprend une chambre de piston (22) dans laquelle un piston (23) peut être déplacé, lequel piston (23) est raccordé de manière fixe à l'unité de bras pliants (11).

5. Tambour de confection de pneumatiques (1) selon l'une quelconque des revendications précédentes, **caractérisé en ce que** chaque demi-tambour (5, 6) comprend une unité (24) qui peut être activée de manière pneumatique pour déplacer radialement l'unité de serrage de tringle annulaire (15).

6. Tambour de confection de pneumatiques (1) selon l'une quelconque des revendications précédentes, **caractérisé en ce que** chaque demi-tambour (5, 6) comprend une partie de couvercle de boîtier (25) qui est axialement mobile par rapport à la partie cylindrique (17), laquelle partie de couvercle de boîtier (25) forme au moins une surface de boîtier sensiblement fermée pour supporter les composants en caoutchouc et au niveau de la circonférence, est prévue avec des évidements (26) pour loger les bras pliants (12) et les laisser traverser.

7. Tambour de confection de pneumatiques (1) selon la revendication 6, **caractérisé en ce que** la partie de recouvrement de boîtier (25) est prévu avec un dispositif d' aspiration pour retenir les composants de caoutchouc sur la partie de couvercle de boîtier (25).

8. Tambour de confection de pneumatiques (1) selon la revendication 6 ou 7, **caractérisé en ce que** l'unité de serrage de tringle annulaire (15) comprend une partie d'épaulement (27) pour supporter une tringle (16), laquelle partie d'épaulement (27) est mécaniquement raccordée à la partie de couvercle de boîtier (25) par un raccordement mécanique (28).

9. Tambour de confection de pneumatiques (1) selon l'une quelconque des revendications précédentes, **caractérisé en ce que** la broche (7) est entraînée par un servomoteur.
